# EUROPÄISCHE PATENTSCHRIFT

(11) **EP 4 332 535 B1**
(45) Veröffentlichungstag und Bekanntmachung des Hinweises auf die Patenterteilung: **17.06.2026**
(21) Anmeldenummer: 23194889.4
(22) Anmeldetag: 01.09.2023
(51) Int. Cl.: G01M 3/02, G01M 3/28

(54) **VORRICHTUNG, KABELBAUMPRÜFSTATION UND VERFAHREN ZUR DICHTIGKEITSPRÜFUNG**
DEVICE, WIRE HARNESS INSPECTION STATION AND METHOD FOR LEAK TIGHTNESS INSPECTION
DISPOSITIF, STATION D'ESSAI DE FAISCEAU DE CÂBLES ET PROCÉDÉ D'ESSAI D'ÉTANCHÉITÉ

(30) Priorität: 05.09.2022 DE 102022122386
(43) Veröffentlichungstag der Anmeldung: 06.03.2024
(73) Patentinhaber: Lisa Dräxlmaier GmbH, 84137 Vilsbiburg (DE)
(72) Erfinder: Datzmann, Alexander, 84307 Eggenfelden (DE); Brunner, Martin, 84155 Bodenkirchen (DE); Kroiss, Andreas, 84494 Niedertaufkirchen (DE)

(56) Entgegenhaltungen:
- CN-A- 114 858 370
- JP-A- H0 972 816
- US-B1- 6 382 016
- US-B1- 6 564 617

## Beschreibung

### Technisches Gebiet

Die vorliegende Erfindung betrifft eine Vorrichtung zur Dichtigkeitsprüfung einer Tülle eines Kabelbaums, eine die Vorrichtung aufweisende Kabelbaumprüfstation sowie ein korrespondierendes Verfahren zur Dichtigkeitsprüfung einer Tülle eines Kabelbaums mit der Vorrichtung.

### Stand der Technik

Aus dem Stand der Technik sind sogenannte Vakuum-Tonnen Stationen bekannt, die zur Dichtigkeitsprüfung von Tüllen eines Kabelbaums verwendet werden. Eine Vakuum-Tonnen Station weist dazu eine Vakuum-Tonne mit einer Öffnung auf, auf die die zu prüfende Tülle aufgelegt wird. Nach einer anschließenden Verringerung des Drucks in der Vakuum-Tonne wird geprüft, inwiefern der Unterdruck in der Vakuum-Tonne gehalten wird. Im Falle eines Anstiegs des Drucks in der Vakuumtonne kann davon ausgegangen werden, dass die Tülle des Kabelbaums nicht dicht ist. Für jede Art von Tülle weist die Vakuum-Tonnen Station eine entsprechende Aufnahme auf. Dementsprechend muss für jede Art von Tülle eine separate Vakuumtonne bereitgestellt werden, dies ist mit erheblichen Aufwand während des Testprozesses, sowie hohen Bereitstellungskosten verbunden. Zudem weisen aus dem Stand der Technik bekannte Kabelbaumprüfstationen meist eine Druckluftversorgung auf, die bei Vakuum-Tonnen Stationen ebenfalls dazu genutzt wird, um mit Hilfe von Venturi-Düsen das Vakuum zu erzeugen. Dies hat zur Folge, dass die Herstellung des Vakuums in den Vakuum-Tonnen Stationen energetisch äußerst aufwendig ist. All die genannten Nachteile des Stands der Technik verringern die Effizienz der Dichtigkeitsprüfung in energetischer Hinsicht erheblich und sind insbesondere sehr zeitaufwendig.

Die Druckschrift CN 114 858 370 A betrifft eine Dichtheitsprüfmaschine für Kabelbaum-Gummihülsen sowie ein Prüfverfahren dafür.

Die Druckschrift US 6 382 016 B1 betrifft eine Wasserdichtigkeitsprüfvorrichtung zum Prüfen, ob in dem Spalt zwischen gebündelten elektrischen Kabeln, die in eine Durchführungstülle eingeführt wurden, eine wasserdichte Abdichtung erreicht ist.

Die Druckschrift US 6 564 617 B1 betrifft ein Gerät zum Prüfen der Wasserdichtigkeit einer Gummitülle.

### Beschreibung der Erfindung

Eine technische Aufgabe der Erfindung ist es daher, unter Einsatz konstruktiv möglichst einfacher Mittel eine Vorrichtung, sowie ein korrespondierendes Verfahren bereitzustellen, die eine besonders energetisch effiziente Dichtigkeitsprüfung von Tüllen eines Kabelbaums ermöglicht.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Gemäß einem ersten Aspekt der Erfindung wird die Aufgabe durch eine erfindungsgemäße Vorrichtung zur Dichtigkeitsprüfung einer Tülle eines Kabelbaums gelöst, aufweisend einen Prüfbehälter mit einem auf einer Öffnung des Prüfbehälters fluiddicht angeordneten Aufsatz zur Aufnahme einer Tülle eines Kabelbaums, eine Klemmvorrichtung zur fluiddichten Befestigung der Tülle auf dem Aufsatz und eine Fluidversorgungseinrichtung, die mit dem Prüfbehälter verbunden ist und zur Erzeugung eines Überdruckes im Prüfbehälter dient.

Die Nutzung von Überdruck statt eines Vakuums zur Dichtigkeitsprüfung einer Tülle eines Kabelbaums ermöglicht eine deutlich energieeffizientere Dichtigkeitsprüfung. So wird der Überdruck häufig zentral erzeugt und kann der erfindungsgemäßen Vorrichtung energieeffizient bereitgestellt werden. Die Erzeugung eines Vakuums hingegen erfordert entweder die Nutzung von Venturi-Düsen oder separaten Kompressoren. In beiden Fällen ist die Vakuumerzeugung weniger effizient als die Überdruckerzeugung mittels einer zentralen Erzeugungseinheit. Gleichzeitig hat die erfindungsgemäße Vorrichtung einen besonders einfachen und kompakten Aufbau, der eine einfache Integration der Vorrichtung in eine Kabelbaumprüfstation ermöglicht. Zudem ist die Vorrichtung mit einer Vielzahl unterschiedlicher Tüllen kompatibel, da die fluiddichte Anordnung der Tülle auf dem Aufsatz mittels der Klemmvorrichtung sichergestellt werden kann.

Die Fluidversorgungseinrichtung kann eine Überdruckversorgungseinrichtung sein. Das zur Dichtigkeitsprüfung verwendete Fluid kann Luft sein, so dass die Überdruckversorgungseinrichtung eine Drucklufteinrichtung ist. Jedoch ist auch die Nutzung eines anderen Fluides wie beispielsweise Wasser und/ oder einem anderen Gas denkbar.

Die Tülle kann eine Butyl-Tülle sein. Alternativ oder zusätzlich kann die Tülle im Wesentlichen aus einem flexiblen Kunststoff oder Gummi hergestellt sein.

Der Aufsatz kann ebenfalls aus Gummi und/ oder einem flexiblen Kunststoff hergestellt sein. Denkbar ist auch, dass der Aufsatz ein Dichtelement und eine Stützstruktur aufweist, wobei die Stützstruktur auf dem Prüfbehälter aufliegt.

Der Aufsatz und/ oder das Dichtelement des Aufsatzes kann eine Form aufweisen, die auf ein bestimmte Ausgestaltung einer Tülle abgestimmt ist.

Der Prüfbehälter kann Schrägen im Inneren aufweisen. Jene Schrägen können derart ausgestaltet sein, sodass ein Verkanten der Stecker des Kabelbaums im Inneren des Prüfbehälters bei der Entnahme des Kabelbaums aus dem Prüfbehälter verhindert wird. Der Prüfbehälter kann ein Auslassventil zum Druckausgleich nach der Dichtigkeitsprüfung aufweisen.

Die Vorrichtung weist einen Drucksensor zur Messung des Druckes im Prüfbehälter auf.

Die Nutzung eines Drucksensors erlaubt eine besonders genaue Erfassung des Druckverlaufs im Prüfbehälter und damit eine besonders präzise Erfassung von Undichtigkeiten in der zu prüfenden Tülle.

Der Drucksensor kann im Prüfbehälter selbst angeordnet sein. Der Drucksensor kann alternativ oder zusätzlich in der Fluidversorgungseinrichtung angeordnet sein.

Gemäß einer Ausführungsform kann die Fluidversorgungseinrichtung einen Durchflusssensor zur Messung des Fluiddurchflusses von der Fluidversorgungseinrichtung in den Prüfbehälter aufweisen. Mittels eines Durchflusssensors kann auf besonders exakte Art und Weise die Dichtigkeit der zu prüfenden Tülle geprüft werden. Unter Einhaltung eines konstanten Überdrucks im Prüfbehälter kann anhand des zur Haltung des Überdrucks notwendigen Fluidzuflusses von der Fluidversorgungseinrichtung auf die Dichtigkeit der Tülle geschlossen werden. Zur Bestimmung des notwendigen Fluidzuflusses kann der Durchflusssensor genutzt werden. Auch denkbar ist alleine anhand des Fluidzuflusses von der Fluidversorgungseinrichtung in den Prüfbehälter auf die Dichtigkeit der zu prüfenden Tülle zu schließen, da der Druckverlauf im Prüfbehälter direkte Auswirkungen auf den Fluidzufluss hat. So kann anhand des Fluidzuflusses von der Fluidversorgungseinrichtung auf den Druckverlauf im Prüfbehälter und damit auf die Dichtigkeit der Tülle geschlossen werden.

Die Fluidversorgungseinrichtung weist zwei Druckregler auf, wobei die Druckregler jeweils einen der Drucksensoren umfassen.

Die Verwendung zweier Druckregler erlaubt eine besonders effektive und exakte Bestimmung der Dichtigkeit der zu prüfenden Tülle. Ein im Druckregler integrierter Drucksensor kann den Druckverlauf im Prüfbehälter erfassen, wobei auf Basis dieses Druckverlaufs Rückschlüsse auf die Dichtigkeit der zu prüfenden Tülle möglich sind. Insbesondere die Nutzung zweier Druckregler erlaubt eine besonders effektive Dichtigkeitsprüfung einer Tülle. So kann mittels eines ersten Druckreglers, der einen verhältnismäßig großen Fluiddurchfluss von der Fluidversorgungseinrichtung erlaubt, schnell der Überdruckdruck im Prüfbehälter erhöht werden. Bei Erreichung eines ersten Druckniveaus kann dann mittels eines zweiten, präziser steuernden Druckreglers, der einen verhältnismäßig geringen Fluiddurchfluss von der Fluidversorgungseinrichtung erlaubt, der Überdruck im Inneren des Prüfbehälters präzise auf einen Prüfdruck erhöht werden.

Ein Druckregler im Sinne der vorliegenden Erfindung ist ein druckgesteuertes Ventil. Das heißt der Druckregler kann auf ein gewünschtes Druckniveau eingestellt werden, wobei der Durchfluss durch den Druckregler unterbunden wird, wenn auf der Fluidausgangsseite des Druckreglers das gewünschte Druckniveau erreicht wird. Der Durchfluss durch den Druckregler wird dann bereitgestellt, wenn auf der Fluidausgangsseite des Druckreglers der Überdruck geringer als das gewünschte Druckniveau ist.

Gemäß einer Ausführungsform kann die Klemmvorrichtung zwei Klemmelemente aufweisen, die derart angeordnet sind, sodass die Klemmelemente in einer Schließstellung aufeinander liegen und die Tülle fluiddicht mit dem Aufsatz verbinden.

Die Anordnung zweier Klemmelemente erlauben eine besonders effektive Durchführung der Dichtigkeitsprüfung, da die beiden Klemmelemente eine besonders schnelle fluiddichte Fixierung der zu prüfenden Tülle auf dem Aufsatz und damit besonders schnelle und einfache Durchführung der Dichtigkeitsprüfung erlauben. Außerdem erlaubt die Nutzung von Klemmelementen zur fluiddichten Verbindung des Aufsatzes mit der zu prüfenden Tülle die Prüfung unterschiedlich ausgestalteter Tüllen ohne einen spezifischen Aufsatz bereitstellen zu müssen. Folglich wird eine besonders flexible und kostengünstige Dichtigkeitsprüfung ermöglicht.

Gemäß einer Ausführungsform können die Klemmelemente derart ausgebildet sein, sodass die Klemmelemente in Schließstellung miteinander verhaken und bei Aufwendung einer Kraft aus Richtung des Prüfbehälters in der Schließstellung verbleiben. Durch das Verhaken der Klemmelemente kann ein ungewolltes und unkontrolliertes Aufspringen der Klemmelemente aus der Schließstellung heraus verhindert werden, wenn der Überdruck im Prüfbehälter erhöht wird. Ein unkontrolliertes Aufspringen der Klemmelemente kann zu Verletzungen der die Vorrichtung bedienenden Person führen. Außerdem führt ein Aufspringen zum Abbruch der Dichtigkeitsprüfung. Folglich wird eine besonders sichere und effektive Dichtigkeitsprüfung entsprechend der erfindungsgemäßen Vorrichtung ermöglicht.

Die Klemmelemente können folglich eine Art Selbsthemmung aufweisen, die die Klemmelemente in der Schließstellung halten.

Gemäß einer Ausführungsform kann die Klemmvorrichtung zumindest eine, bevorzugt zwei Schließeinrichtungen aufweist, die derart angeordnet und ausgebildet sind, sodass die Schließeinrichtungen die Klemmelemente in der Schließstellung halten. Das Verschließen der Klemmelemente in Schließstellung mittels einer bevorzugt zweier Schließeinrichtungen ermöglicht ein sicheres und fluiddichtes Verbinden der zu prüfenden Tülle mit dem Aufsatz des Prüfbehälters, sodass eine besonders effiziente Dichtigkeitsprüfung ermöglicht wird.

Die Schließeinrichtung kann zumindest einen Anwesenheitspin aufweisen, der derart ausgebildet und angeordnet ist, sodass der Anwesenheitspin in der Schließstellung durch die Klemmvorrichtung ausgelöst wird und ein Schließen der Schließeinrichtung bewirkt. Denkbar ist auch dass das Auslösen des Anwesenheitspins den Start der Dichtigkeitsprüfung des Prüfbehälters initiiert.

Gemäß einer Ausführungsform kann der Prüfbehälter derart relativ zur Klemmvorrichtung bewegbar sein, sodass der Abstand zwischen Klemmvorrichtung und Aufsatz variabel ist.

Durch die Bewegung des Prüfbehälters relativ zur Klemmvorrichtung kann auf eine spezifische Anpassung des Aufsatzes an Tüllen unterschiedlicher Höhe verzichtet werden. Stattdessen kann die Höhe des Raumes zwischen Klemmvorrichtung und Aufsatz variiert werden. Folglich kann eine besonders flexible und dennoch energieeffiziente Dichtigkeitsprüfung durchgeführt werden.

Die Variation des Abstandes zwischen Klemmvorrichtung und Aufsatz kann mittels einer Stellschraube realisiert werden, die eine Höhenverstellung der Prüfflasche innerhalb der Vorrichtung erlaubt.

Gemäß einem zweiten Aspekt der Erfindung wird die Aufgabe durch eine Kabelbaumprüfstation zur Funktionsprüfung eines Kabelbaums gelöst aufweisend eine erfindungsgemäße Vorrichtung.

Die Integration der erfindungsgemäßen Vorrichtung in eine Kabelbaumprüfstation ermöglicht eine besonders effiziente Dichtigkeitsprüfung einer Tülle, da die die Dichtigkeitsprüfung durchführende Person die Funktionsprüfung des Kabelbaums wie auch die Dichtigkeitsprüfung der Tüllen des Kabelbaums parallel und/ oder nacheinander durchführen kann, ohne einen Transport zwischen unterschiedlichen Prüfstationen durchführen zu müssen. Zudem kann die erfindungsgemäße Vorrichtung beispielsweise mit der bereits in der Kabelbaumprüfstation vorhandenen Überdruckversorgung verbunden werden.

Gemäß einem dritten Aspekt der Erfindung wird die Aufgabe durch ein Verfahren zur Dichtigkeitsprüfung einer Tülle eines Kabelbaums mit einer erfindungsgemäßen Vorrichtung aufweisend die folgenden Schritte gelöst:
Anordnung der Tülle auf einem Aufsatz eines Prüfbehälters, sodass die Tülle fluiddicht mit dem Aufsatz verbunden ist, Befüllung des Prüfbehälters mit einem Fluid mittels einer Fluidversorgungseinrichtung bis zur Erreichung eines Prüfdruckes im Prüfbehälter, Bestimmung des Überdruckes im Prüfbehälter während einer Prüfzeit und Bestimmung der Dichtigkeit der Tülle anhand der Veränderung des Überdruckes während der Prüfzeit. Insbesondere durch die Auswertung des Druckverlaufes während der Prüfzeit im Prüfbehälter kann auf besonders effektive und exakte Weise auf die Dichtigkeit der zu prüfenden Tülle geschlossen werden. Außerdem kann, wie bereits erwähnt wurde, Druckluft als Fluid im Sinne der vorliegenden Erfindung verwendet werden. Druckluft steht beim Prüfen von Kabelbäumen meist zur Verfügung und wird zentral erzeugt, sodass die Dichtigkeitsprüfung aus energetischer Sicht mittels des erfindungsgemäßen Verfahrens besonders effizient während der Prüfzeit ist.

Denkbar ist auch die Aufzeichnung der Ergebnisse der Dichtigkeitsprüfung. Dementsprechend kann jeder zu prüfenden Tülle ein Druckverlauf zugeordnet und aufgezeichnet werden, der auch im Nachhinein noch nachvollzogen werden kann, was insbesondere im Rahmen eines nachgelagertem Qualitätsmanagements von Interesse ist. Der Prüfdruck kann zwischen 150mbar und 250mbar, bevorzugt 200mbar betragen.

Die Prüfzeit einer Dichtigkeitsprüfung ab Befüllung des Prüfbehälters kann zwischen 100s und 200s, bevorzugt 160s betragen.

Die Befüllung des Prüfbehälters kann durch das Auslösen des Anwesenheitspins initiiert werden.

Gemäß einer Ausführungsform kann zur Bestimmung der Dichtigkeit der Tülle ein Fluiddurchfluss durch die Fluidversorgungseinrichtung, der benötigt wird um den Prüfdruck im Prüfbehälter während einer Prüfzeit konstant zu erhalten, bestimmt werden.

Die Ermittlung des Fluiddurchflusses von der Fluidversorgungseinrichtung zur Dichtigkeitsprüfung der Tülle erlaubt eine besonders exakte und effiziente Bestimmung der Dichtigkeit der zu prüfenden Tülle. Die Bestimmung der Dichtigkeit der Tülle kann anhand des Fluiddurchflusses und/ oder der Veränderung des Druckes im Prüfbehälter während der Prüfzeit erfolgen. Die Tülle gilt beispielsweise als nicht fluiddicht, wenn der Durchfluss mehr als 50ml/min beträgt und der Überdruck im Prüfbehälter maximal um 20mbar vom Prüfdruck abweicht.

Zur Erreichung des Prüfdruckes erfolgt die Befüllung des Prüfbehälters mittels eines ersten Druckreglers bis zu einem ersten Überdruck und mittels eines zweiten Druckreglers bis zum Prüfdruck, wobei der zweite Druckregler einen geringeren Überdruck aufweist als der erste Druckregler und wobei die Druckregler jeweils einen Drucksensor umfassen.

Die Nutzung zweier Druckregler erlaubt eine besonders schnelle Befüllung des Prüfbehälters mit dem Fluid bis zur Erreichung des Prüfdruckes. Folglich ist das Verfahren zu Prüfung der Dichtigkeit einer Tülle eines Kabelbaums besonders effizient.

Der erste Überdruck kann zwischen 130mbar und 230mbar, bevorzugt 180mbar betragen. Der Überdruck des ersten Druckreglers kann beispielsweise zwischen 300mbar und 700mbar, bevorzugt 500mbar betragen.

Der Überdruck des zweiten Druckreglers kann identisch zum Prüfdruck sein.

### Kurze Figurenbeschreibung

Nachfolgend wird ein vorteilhaftes Ausführungsbeispiel der Erfindung unter Bezugnahme auf die begleitenden Figuren erläutert. Es zeigen:
- Figur 1: eine isometrische Ansicht der erfindungsgemäßen Vorrichtung 1 gemäß einem Ausführungsbeispiel;
- Figur 2: eine Seitenansicht der erfindungsgemäßen Vorrichtung 1 gemäß Figur 1;
- Figur 3: eine Seitenansicht der erfindungsgemäßen Vorrichtung 1 gemäß Figur 1 und 2;

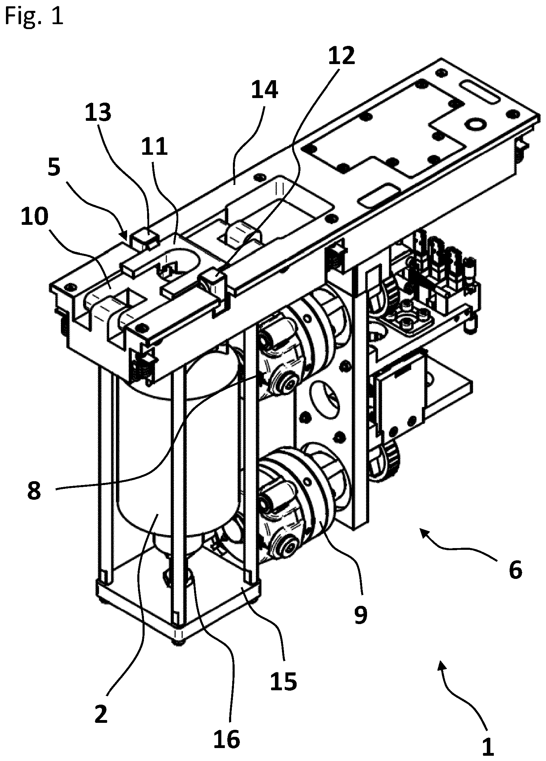

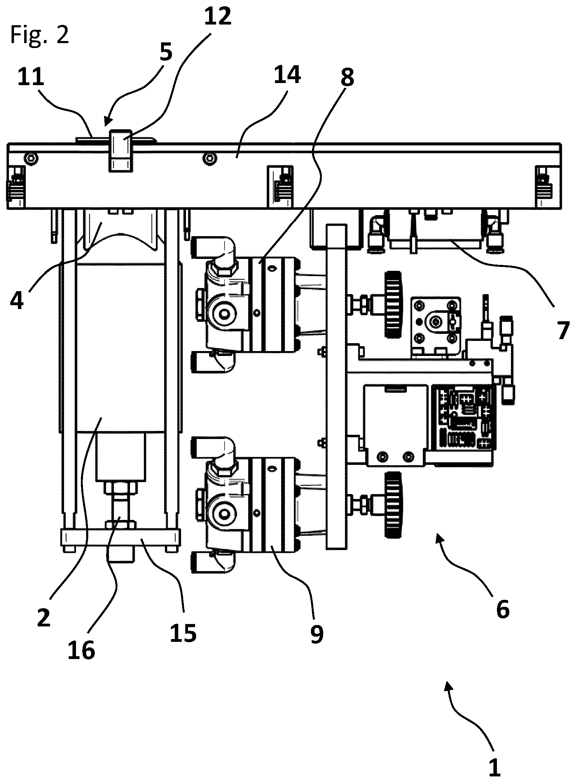

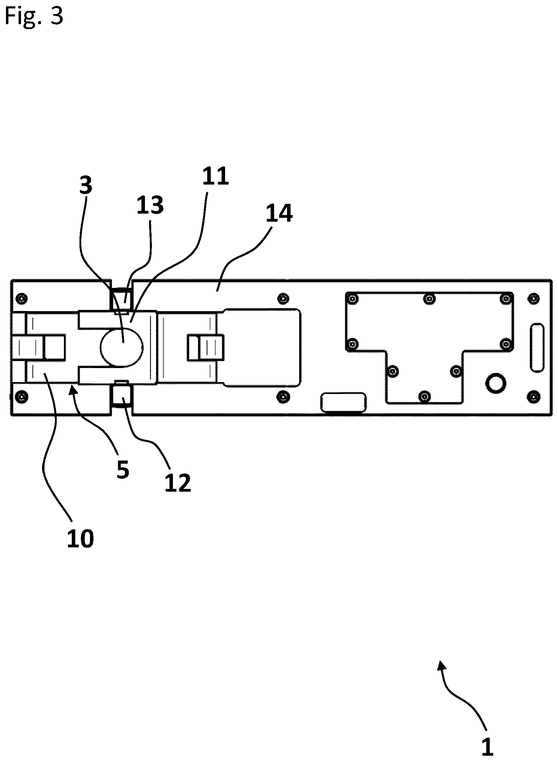

Die Figuren 1 bis 3 zeigen eine erfindungsgemäße Vorrichtung 1, die einen Prüfbehälter 2 mit einer Öffnung 3 und einen Aufsatz 4 aufweist (nicht dargestellt in der Figur 1 und der Figur 3). Auf diesem Aufsatz 4 kann eine zu prüfende Tülle des Kabelbaums aufgelegt werden. Der Aufsatz 4 wird in Figur 2 gezeigt. Der Aufsatz 4 kann eine zum Prüfbehälter 2 korrespondierende Form aufweisen und bevorzugt derart ausgebildet sein, sodass der Aufsatz 4 auf den Prüfbehälter 2 aufgesteckt werden kann und der Aufsatz 4 oberhalb der Öffnung 3 des Prüfbehälters 2 angeordnet ist. Der Aufsatz 4 kann ein bevorzugt elastisches Dichtelement aufweisen, das eine fluiddichte Verbindung zwischen Prüfbehälter 2 und zu prüfender Tülle ermöglicht. Eine zu prüfende Tülle wird in den Figuren nicht gezeigt.

Zudem weist die Vorrichtung 1 eine Klemmvorrichtung 5 auf, die ein festklemmen der Tülle auf dem Aufsatz 4 ermöglicht. Dazu kann die Klemmvorrichtung 5 ein erstes Klemmelement 10 und ein zweites Klemmelement 11 aufweisen, die in einer Schließstellung, wie sie in den Figuren gezeigt wird, eine nicht gezeigte Tülle gegen den Aufsatz 4 drücken und so die Tülle fluiddicht mit dem Aufsatz 4 verbinden. Die beiden Klemmelemente 10, 11 können derart angeordnet und ausgebildet sein, sodass die Klemmelemente 10, 11 in der Schließstellung miteinander verhaken und bei Aufwendung einer Kraft aus Richtung des Prüfbehälters 2 in der Schließstellung verbleiben. Wie insbesondere in Figur 1 und 3 zu sehen ist, können die Klemmelemente 10, 11 dazu eine Gabelform aufweisen. Zudem kann das erste Klemmelement 10 in einer Schließstellung unterhalb des zweiten Klemmelementes 11 angeordnet sein. Ein Verhaken der beiden Klemmelemente 10, 11 kann durch das Vorsehen einer beziehungsweise zweier Anlageflächen an der Unterseite des zweiten Klemmelementes 11 ermöglicht werden. In der Schließstellung kann dazu das zweite Klemmelement 11 auf dem ersten Klemmelement 10 aufliegen, zusätzlich kann die quer zur Auflagefläche verlaufende Anlagefläche des zweiten Klemmelementes 11 das erste Klemmelement 10 berühren. Die Klemmvorrichtung 5 kann zudem zwei Schließeinrichtungen 12, 13 aufweisen, die derart ausgebildet und angeordnet sind, sodass die Schließeinrichtungen 12, 13 die Klemmelemente 10, 11 in der Schließstellung halten. So kann, wie in den Figuren gezeigt wird, die erste und zweite Schließeinrichtung 12, 13 im wesentlichen zylinder- oder quaderförmig ausgebildet sein, wobei an deren oberen Ende jeweils eine Haltestruktur, besonders bevorzugt jeweils eine Haltestruktur in Form eines Rastelementes, ausgebildet ist. Die Haltestruktur kann derart ausgebildet sein, sodass beim Bewegen der Klemmelemente 10, 11 von einer geöffneten Stellung in die Schließstellung die Haltestrukturen der Schließeinrichtungen 12, 13 selbständig einrasten und so die Klemmelemente 10, 11 in der Schließstellung halten. Insbesondere haltend die Schließeinrichtungen 12, 13 das zweite Klemmelement 11 in der Schließstellung, wobei das zweite Klemmelement 11 das erste Klemmelement 10 in der Schließstellung hält.

Die Vorrichtung 1 weist zudem eine Fluidversorgungseinrichtung 6 auf, die mit dem Prüfbehälter 2 verbunden ist und zur Erzeugung eines Überdruckes im Prüfbehälter 2 dient. Zur Wahrung der Übersichtlichkeit der Figuren sind in den Figuren nicht die Fluidschläuche abgebildet, sondern nur die einzelnen Komponenten der Fluidversorgungseinrichtung 6. So kann die Fluidversorgungseinrichtung 6 einen Durchflusssensor 7 aufweisen, der den Fluiddurchfluss in den Prüfbehälter 2 misst. Wie insbesondere in Figur 2 zu sehen ist, kann der Durchflusssensor 7 an einer Haltevorrichtung 14 montiert sein. An der Haltevorrichtung 14 kann zudem die Klemmvorrichtung 5 montiert sein. Zudem weist die Fluidversorgungseinrichtung 6 einen ersten Druckregler 8 und einen zweiten Druckregler 9 auf, die jeweils mit dem Prüfbehälter 2 fluidisch verbunden sind. Jene Druckregler 8, 9 können Drucksensoren aufweisen, um den Überdruck am Ausgang des jeweiligen Druckreglers 8, 9 und/ oder dem im Prüfbehälter 2 vorherrschenden Überdruck zu bestimmen. Der Überdruck des ersten Druckreglers 8 kann kleiner sein als der Überdruck des zweiten Druckreglers 9. Der Überdruck des ersten Druckreglers 8 kann dem Prüfdruck entsprechen. Denkbar ist auch eine automatisierte Fluidversorgung der Prüfbehälter 2 beispielsweise mittels eines automatisierten Ventils. Wie insbesondere in Figur 2 dargestellt wird, können der oder die Druckregler 8, 9 ebenfalls an der Haltevorrichtung 14 montiert sein. Die Druckregler 8, 9 können einerseits über den Durchflusssensor 7 fluidisch mit der Fluidversorgung, die nicht abgebildet ist, verbunden und/ oder andererseits mit dem Prüfbehälter 2 fluidisch verbunden sein.

Auch der Prüfbehälter 2 kann an der Haltevorrichtung 14 montiert sein. Ein Gestell 15 kann dazu den Prüfbehälter 2 aufnehmen und mit der Haltevorrichtung 14 verbinden. Zudem kann der Prüfbehälter 2 derart ausgebildet sein, sodass der Prüfbehälter 2 relativ zur Klemmvorrichtung 5 bewegbar ist. Dazu kann der Prüfbehälter 2 und das korrespondierende Gestell 15 derart angeordnet sein, sodass der Prüfbehälter 2 relativ zur Haltevorrichtung 15 bewegbar ist. Insbesondere kann das Gestell 15 dazu eine Stellschraube 16 aufweisen, die derart ausgebildet und angeordnet ist, sodass der auf der Stellschraube 16 aufliegende Prüfbehälter 2 relativ zur Haltevorrichtung 14 und der an der Haltevorrichtung 14 montierten Klemmvorrichtung 5 bewegbar ist.

Die Figuren sind lediglich schematische Darstellungen und dienen nur der Erläuterung der Erfindung. Gleiche oder gleichwirkende Elemente sind durchgängig mit den gleichen Bezugszeichen versehen.

### BEZUGSZEICHENLISTE

- 1: Vorrichtung
- 2: Prüfbehälter
- 3: Öffnung
- 4: Aufsatz
- 5: Klemmvorrichtung
- 6: Fluidversorgungseinrichtung
- 7: Durchflusssensor
- 8: Erster Druckregler
- 9: Zweiter Druckregler
- 10: Erstes Klemmelement
- 11: Zweites Klemmelement
- 12: Erste Schließeinrichtung
- 13: Zweite Schließeinrichtung
- 14: Haltevorrichtung
- 15: Gestell
- 16: Stellschraube

## Patentansprüche

1. Vorrichtung (1) zur Dichtigkeitsprüfung einer Tülle eines Kabelbaums aufweisend:
- einen Prüfbehälter (2) mit einem auf einer Öffnung (3) des Prüfbehälters (2) fluiddicht angeordneten Aufsatz (4) zur Aufnahme einer Tülle eines Kabelbaums,
- eine Klemmvorrichtung (5) zur fluiddichten Befestigung der Tülle auf dem Aufsatz (4), und
- eine Fluidversorgungseinrichtung (6), die mit dem Prüfbehälter (2) verbunden ist und zur Erzeugung eines Überdruckes im Prüfbehälter (2) dient,
- mit einem Drucksensor zur Messung des Überdruckes im Prüfbehälter (2),
- **dadurch gekennzeichnet, dass** die Fluidversorgungseinrichtung (6) einen ersten Druckregler (8) und einen zweiten Druckregler (9) aufweist, wobei die Druckregler (8, 9) jeweils einen Drucksensor umfassen,
- wobei der zweite Druckregler (9) einen geringeren Überdruck aufweist als der erste Druckregler (8),
- wobei die Vorrichtung eingerichtet ist, zur Erreichung des Prüfdruckes den Prüfbehälter (2) mittels des ersten Druckreglers (8) bis zu einem ersten Überdruck zu befüllen und mittels des zweiten Druckreglers (9) bis zum Prüfdruck zu befüllen.

2. Vorrichtung (1) nach Anspruch 1, wobei die Fluidversorgungseinrichtung (6) einen Durchflusssensor (7) zur Messung des Fluiddurchflusses von der Fluidversorgungseinrichtung (6) in den Prüfbehälter (2) aufweist.

3. Vorrichtung (1) nach einem der vorhergehenden Ansprüche, wobei die Klemmvorrichtung (5) zwei Klemmelemente (10, 11) aufweist, die derart angeordnet sind, sodass die Klemmelemente (10, 11) in einer Schließstellung aufeinander liegen und die Tülle fluiddicht mit dem Aufsatz (4) verbinden.

4. Vorrichtung (1) nach Anspruch 3, wobei die Klemmelemente (10, 11) derart ausgebildet sind, sodass die Klemmelemente (10, 11) in Schließstellung miteinander verhaken und bei Aufwendung einer Kraft aus Richtung des Prüfbehälters (2) in der Schließstellung verbleiben.

5. Vorrichtung (1) nach Anspruch 3 oder 4, wobei die Klemmvorrichtung (5) zumindest eine, bevorzugt zwei Schließeinrichtungen (12, 13) aufweist, die derart angeordnet und ausgebildet sind, sodass die Schließeinrichtungen (12, 13) die Klemmelemente (10, 11) in der Schließstellung halten.

6. Vorrichtung (1) nach einem der vorhergehenden Ansprüche, wobei der Prüfbehälter (2) derart relativ zur Klemmvorrichtung (5) bewegbar ist, sodass der Abstand zwischen Klemmvorrichtung (5) und Aufsatz (4) variiert wird.

7. Kabelbaumprüfstation zur Funktionsprüfung eines Kabelbaums aufweisend eine Vorrichtung (1) gemäß einem der vorhergehenden Ansprüche.

8. Verfahren zur Dichtigkeitsprüfung einer Tülle eines Kabelbaums mit einer Vorrichtung (1) gemäß einem der Ansprüche 1 bis 6 aufweisend die folgenden Schritte:
- Anordnung der Tülle auf dem Aufsatz(4) des Prüfbehälters (2), sodass die Tülle fluiddicht mit dem Aufsatz (4) verbunden ist,
- Befüllung des Prüfbehälters(2) mit einem Fluid mittels der Fluidversorgungseinrichtung (6) bis zur Erreichung eines Prüfdruckes im Prüfbehälter (2),
- Bestimmung des Überdruckes im Prüfbehälter (2) während einer Prüfzeit, und Bestimmung der Dichtigkeit der Tülle anhand der Veränderung des Überdruckes während der Prüfzeit,
wobei zur Erreichung des Prüfdruckes die Befüllung des Prüfbehälters (2) mittels des ersten Druckreglers (8) bis zu einem ersten Überdruck erfolgt und mittels des zweiten Druckreglers (9) bis zum Prüfdruck erfolgt,
wobei der zweite Druckregler (9) einen geringeren Überdruck aufweist als der erste Druckregler (8), und
wobei die Druckregler (8, 9) jeweils einen Drucksensor umfassen.

9. Verfahren nach Anspruch 8 wobei zur Bestimmung der Dichtigkeit der Tülle ein Fluiddurchfluss durch die Fluidversorgungseinrichtung (6), der benötigt wird um den Prüfdruck im Prüfbehälter (2) während einer Prüfzeit konstant zu erhalten, bestimmt wird.

## Claims

1. Device (1) for leak testing a grommet of a wiring harness, comprising:
- a test vessel (2) having an attachment (4), arranged fluid-tightly on an opening (3) of the test vessel (2), for receiving a grommet of a wiring harness,
- a clamping device (5) for fastening the grommet fluid-tightly on the attachment (4), and
- a fluid supply device (6), which is connected to the test vessel (2) and serves to generate an overpressure in the test vessel (2),
- having a pressure sensor for measuring the overpressure in the test vessel (2),
- **characterized in that**
the fluid supply device (6) has a first pressure regulator (8) and a second pressure regulator (9), wherein the pressure regulators (8, 9) each comprise a pressure sensor,
- wherein the second pressure regulator (9) has a lower overpressure than the first pressure regulator (8),
- wherein the device is designed, in order to achieve the test pressure, to fill the test vessel (2) by means of the first pressure regulator (8) up to a first overpressure and by means of a second pressure regulator (9) up to the test pressure.

2. Device (1) according to Claim 1, wherein the fluid supply device (6) has a flow sensor (7) for measuring the fluid flow from the fluid supply device (6) into the test vessel (2).

3. Device (1) according to either of the preceding claims, wherein the clamping device (5) has two clamping elements (10, 11), which are arranged in such a way that the clamping elements (10, 11) rest on one another in a closed position and connect the grommet fluid-tightly to the attachment (4).

4. Device (1) according to Claim 3, wherein the clamping elements (10, 11) are designed in such a way that the clamping elements (10, 11) interlock in the closed position and remain in the closed position when a force is applied from the direction of the test vessel (2).

5. Device (1) according to Claim 3 or 4, wherein the clamping device (5) has at least one, preferably two, closing devices (12, 13), which are arranged and designed in such a way that the closing devices (12, 13) hold the clamping elements (10, 11) in the closed position.

6. Device (1) according to any of the preceding claims, wherein the test vessel (2) can be moved relative to the clamping device (5) in such a way that the distance between the clamping device (5) and the attachment (4) is varied.

7. Wiring harness testing station for functional testing of a wiring harness, having a device (1) according to any of the preceding claims.

8. Method for leak testing a grommet of a wiring harness having a device (1) according to one of Claims 1 to 6, comprising the following steps:
- arranging the grommet on the attachment (4) of a test vessel (2), such that the grommet is connected fluid-tightly to the attachment (4),
- filling the test vessel (2) with a fluid by means of a fluid supply device (6) until a test pressure is achieved in the test vessel (2),
- determining the overpressure in the test vessel (2) during a test period, and determining the leak tightness of the grommet on the basis of the change in the overpressure during the test period,
wherein, in order to achieve the test pressure, the test vessel (2) is filled by means of a first pressure regulator (8) up to a first overpressure and by means of a second pressure regulator (9) up to the test pressure, wherein the second pressure regulator (9) has a lower overpressure than the first pressure regulator (8), and wherein the pressure regulators (8, 9) each comprise a pressure sensor.

9. Method according to Claim 8, wherein, to determine the leak tightness of the grommet, a fluid flow through the fluid supply device (6) which is required to keep the test pressure in the test vessel (2) constant during a test period is determined.

## Revendications

1. Dispositif (1) de vérification de l'étanchéité d'un passe-câble d'un faisceau de câbles, comportant :
- un contenant de test (2) avec un embout (4) disposé de manière étanche aux fluides sur une ouverture (3) du contenant de test (2) destiné à recevoir un passe-câble d'un faisceau de câbles,
- un dispositif de serrage (5) pour la fixation étanche aux fluides du passe-câble sur l'embout (4), et
- un système d'alimentation en fluide (6), qui est relié au contenant de test (2) et sert à générer une surpression dans le contenant de test (2),
- avec un capteur de pression pour mesurer la surpression dans le contenant de test (2),
- **caractérisé en ce que**
le système d'alimentation en fluide (6) comporte un premier régulateur de pression (8) et un deuxième régulateur de pression (9), les régulateurs de pression (8, 9) comprenant chacun un capteur de pression,
- le deuxième régulateur de pression (9) présentant une surpression inférieure à celle du premier régulateur de pression (8),
- le dispositif étant mis au point pour remplir le contenant de test (2) jusqu'à une première surpression au moyen du premier régulateur de pression (8) et pour le remplir jusqu'à la pression de test au moyen du deuxième régulateur de pression (9) pour atteindre la pression de test.

2. Dispositif (1) selon la revendication 1, le système d'alimentation en fluide (6) comportant un capteur de débit (7) pour mesurer le débit de fluide du système d'alimentation en fluide (6) dans le contenant de test (2).

3. Dispositif (1) selon l'une des revendications précédentes, le dispositif de serrage (5) comportant deux éléments de serrage (10, 11), qui sont disposés de telle manière que les éléments de serrage (10, 11) reposent l'un sur l'autre dans une position fermée et relient le passe-fil à l'embout (4) de manière étanche aux fluides.

4. Dispositif (1) selon la revendication 3, les éléments de serrage (10, 11) étant formés de telle manière que les éléments de serrage (10, 11) s'enclenchent l'un avec l'autre dans la position fermée et restent dans la position fermée lorsqu'une force provenant de la direction du contenant de test (2) est appliquée.

5. Dispositif (1) selon la revendication 3 ou 4, le dispositif de serrage (5) comportant au moins un, de manière préférée deux, systèmes de fermeture (12, 13) qui sont disposés et formés de telle manière que les systèmes de fermeture (12, 13) maintiennent les éléments de serrage (10, 11) dans la position fermée.

6. Dispositif (1) selon l'une des revendications précédentes, le contenant de test (2) pouvant être déplacé par rapport au dispositif de serrage (5) si bien que la distance entre le dispositif de serrage (5) et l'embout (4) varie.

7. Poste de test de faisceaux de câbles pour le test de fonctionnement d'un faisceau de câbles, comportant un dispositif (1) selon l'une des revendications précédentes.

8. Procédé pour tester l'étanchéité d'un passe-câble d'un faisceau de câbles avec un dispositif (1) selon l'une des revendications 1 à 6, comportant les étapes suivantes :
- disposition du passe-fil sur l'embout (4) du contenant de test (2) si bien que le passe-fil est relié de manière étanche aux fluides à l'embout (4),
- remplissage du contenant de test (2) avec un fluide au moyen du système d'alimentation en fluide (6) jusqu'à ce qu'une pression de test soit atteinte dans le contenant de test (2),
- détermination de la surpression dans le contenant de test (2) pendant une période de test et détermination de l'étanchéité du passe-fil à l'aide de la variation de la surpression pendant la période de test,
le contenant de test (2) étant rempli au moyen du premier régulateur de pression (8) jusqu'à une première surpression et au moyen du deuxième régulateur de pression (9) jusqu'à la pression de test pour atteindre la pression de test,
le deuxième régulateur de pression (9) présentant une surpression inférieure à celle du premier régulateur de pression (8), et
les régulateurs de pression (8, 9) comprenant chacun un capteur de pression.

9. Procédé selon la revendication 8, un débit de fluide à travers le système d'alimentation en fluide (6), qui est nécessaire pour maintenir constante la pression de test dans le contenant de test (2) pendant une durée de test, étant déterminé pour déterminer l'étanchéité du passe-fil.
